(19) Europäisches Patentamt
European Patent Office
Office européen des brevets

(11) **EP 3 279 986 A1**

(12) **EUROPEAN PATENT APPLICATION**
published in accordance with Art. 153(4) EPC

(43) Date of publication:
07.02.2018 Bulletin 2018/06

(21) Application number: 16773232.0

(22) Date of filing: 01.04.2016

(51) Int Cl.:
*H01M 4/96* (2006.01)          *D04H 13/00* (2006.01)
*H01M 4/86* (2006.01)          *H01M 4/88* (2006.01)
*H01M 8/10* (2016.01)          *H01M 8/0234* (2016.01)
*H01M 8/0245* (2016.01)

(86) International application number:
PCT/JP2016/060930

(87) International publication number:
WO 2016/159352 (06.10.2016 Gazette 2016/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 02.04.2015 JP 2015075672
16.02.2016 JP 2016026631

(71) Applicant: MITSUBISHI CHEMICAL
CORPORATION
Tokyo 100-8251 (JP)

(72) Inventor: HIDESHIMA Kota
Chiyoda-ku, Tokyo 1008251 (JP)

(74) Representative: Hoffmann Eitle
Patent- und Rechtsanwälte PartmbB
Arabellastraße 30
81925 München (DE)

(54) **POROUS ELECTRODE BASE MATERIAL AND MANUFACTURING METHOD THEREFOR**

(57) There has been a demand for providing a porous electrode substrate having reduced bulk density, having good handling properties and gas permeability, which has conventionally been difficult to produce. A porous electrode substrate having a structure wherein carbon fibers (A) are joined by carbides, the porous electrode substrate having a bulk density of $1.0\text{-}2.0 \times 10^{-1}$ g/cm$^3$ or less when a pressure of $1.5 \times 10^{-1}$ MPa is applied, and having a bending strength of at least 10 MPa.

**Description**

TECHNICAL FIELD

The present invention relates to a manufacturing method for a porous electrode substrate to be used in a fuel cell, a porous electrode substrate manufactured by the manufacturing method, a membrane electrode assembly and a polymer electrolyte fuel cell which include the porous electrode substrate.

This application is based upon and claims the benefit of priority of the prior Japanese Patent Application No. 2015-075672 filed in Japan on April 2, 2015 and the prior Japanese Patent Application No. 2016-026631 filed in Japan on February 16, 2016, the entire contents of which are incorporated herein by reference.

BACKGROUND ART

A polymer fuel cell generally consists of a separator, an electrolyte membrane, a catalyst layer, and a porous electrode substrate. Among them, the porous electrode substrate mainly has the following role. First, it has a function of supplying a fuel gas or an oxidizing gas as uniformly as possible to a noble metal-based catalyst in the catalyst layer through the gas flow path formed in the separator disposed on the outer side of the porous electrode substrate. Second, it has a function of discharging the water produced by a reaction in the catalyst layer. Third, it has a function of conducting the electrons required for the reaction in the catalyst layer or the electrons produced by the reaction to the separator. Hence, it is desired for the porous electrode substrate to exhibit excellent reactant gas and oxidizing gas permeability, water discharging property, and electronic conductivity, and the improvement in power generation performance is expected by enhancing these properties.

In order to cut down the manufacturing cost and to impart high gas permeability and electronic conductivity, a porous electrode substrate manufactured by forming a carbon fiber into a sheet, adding one or both of a water-soluble phenolic resin and a water-dispersible phenolic resin to the sheet, molding the resultant sheet by a continuous heating and pressurizing treatment, and further calcining the sheet molded at a high temperature for carbonization is proposed (see Patent Literature 1).

A porous electrode substrate manufactured by forming a carbon fiber into a sheet, adding a phenolic resin to the sheet, subjecting the resultant sheet to a heating and pressurizing treatment using upper and lower hot plates, and further calcining the resultant sheet at a high temperature for carbonization is proposed in the same manner (see Patent Literature 2).

CITATION LIST

PATENT LITERATURE

Patent Literature 1: WO 2010/102195 A
Patent Literature 2: WO 2014/126002 A

SUMMARY OF THE INVENTION

PROBLEM TO BE SOLVED BY THE INVENTION

Examples of the method of enhancing the gas permeability of the porous electrode substrate may include decreasing the bulk density of the porous electrode substrate. In both of Patent Literature 1 and Patent Literature 2, the heating and pressurizing treatment is performed after the addition of a phenolic resin. In this procedure, however, the resin is generally likely to spread in the in-plane direction but hardly spreads in the direction perpendicular to the plane at the time of the heating and pressurizing treatment. In the case of increasing the bulk density of a porous electrode substrate as in the prior art, the distance between the fibers in the in-plane direction and the direction perpendicular to the plane is short, it is thus easy to bond the fibers to each other even if there is a deviation in the resin attachment direction, and as a result, a porous electrode substrate to be favorably handled is obtained. Meanwhile, in the case of decreasing the bulk density of a porous electrode substrate, the distance between fibers in the in-plane direction and the direction perpendicular to the plane is long, it is thus difficult to bond the fibers in the in-plane direction and the direction perpendicular to the plane to each other by a resin, and as a result, a porous electrode substrate to be hardly handled is obtained.

An object of the invention is to provide a porous electrode substrate which has a low bulk density and favorable handling property and gas permeability and has been thus hardly fabricated in the prior art by fabricating the porous electrode substrate by a manufacturing method different from conventional methods.

MEANS FOR SOLVING PROBLEM

The gist of the invention resides in the following [1] to [14].

[1] A porous electrode substrate including a structure having a carbon fiber (A) bonded by a carbide, in which the porous electrode substrate has a bulk density of $1.0 \times 10^{-1}$ g/cm$^3$ or more and $2.0 \times 10^{-1}$ g/cm$^3$ or less and a bending strength of 10 MPa or more when a pressure of $1.5 \times 10^{-1}$ MPa is applied to the porous electrode substrate.
[2] The porous electrode substrate according to [1], in which the porous electrode substrate has a thickness of 50 $\mu$m or more and 500 $\mu$m or less when a pressure of $1.5 \times 10^{-1}$ MPa is applied to the porous electrode substrate.
[3] The porous electrode substrate according to [1] or [2], in which the porous electrode substrate has an air permeability of 500 ml/cm$^2$/hr/Pa or more in a thickness direction.
[4] The porous electrode substrate according to any one of [1] to [3], in which a thickness of the porous electrode substrate when a pressure of 3 MPa is applied to the porous electrode substrate is 10% or more and 70% or less of a thickness of the porous electrode substrate when a pressure of $5.0 \times 10^{-2}$ MPa is applied to the porous electrode substrate.
[5] The porous electrode substrate according to any one of [1] to [4], in which a thickness of the porous electrode substrate when the pressure is decreased to $5.0 \times 10^{-2}$ MPa after a pressure of 3 MPa is applied to the porous electrode substrate is 40% or more and 95% or less of a thickness of the porous electrode substrate when a pressure of $5.0 \times 10^{-2}$ MPa is applied before the pressure of 3 MPa is applied to the porous electrode substrate.
[6] The porous electrode substrate according to any one of [1] to [5], in which the porous electrode substrate has an electric resistance value of 1.0 m$\Omega \cdot$cm$^2$ or more and 10.0 m$\Omega \cdot$cm$^2$ or less in a thickness direction when a pressure of 3 MPa is applied to the porous electrode substrate.
[7] A membrane electrode assembly including the porous electrode substrate according to any one of [1] to [6].
[8] A polymer fuel cell including the membrane electrode assembly according to [7].
[9] A manufacturing method for a porous electrode substrate including the following steps (1) to (5) in this order:

step (1): a step of manufacturing a precursor sheet 1 having a carbon fiber (A) and a thermoplastic resin-containing fiber (B) dispersed;
step (2): a step of obtaining a molded precursor sheet 1 by heating and pressurizing the precursor sheet to melt the thermoplastic resin-containing fiber (B) and to fuse the thermoplastic resin-containing fiber (B) with the carbon fiber (A) and molding the fused material;
step (3): a step of adding a thermosetting resin to the molded precursor sheet 1 obtained;
step (4): a step of obtaining a molded precursor sheet 2 by heating the molded precursor sheet 1 to which a thermosetting resin is added to cure the thermosetting resin contained; and
step (5): a step of obtaining a porous electrode substrate by carbonizing the molded precursor sheet 2 obtained at a temperature of 1000°C or higher.

[10] The manufacturing method according to [9], in which a molded precursor sheet 2 is obtained by heating the molded precursor sheet 1 to which a resin is added to cure the thermosetting resin contained as well as to melt the thermoplastic resin-containing fiber (B) and to increase a thickness of the molded precursor sheet 1 in the step (4).
[11] The manufacturing method according to [9] or [10], in which a precursor sheet further having a carbon fiber precursor fiber (C) dispersed together with a carbon fiber (A) and a thermoplastic resin-containing fiber (B) is manufactured in the step (1).
[12] The manufacturing method according to any one of [9] to [11], in which a carbon powder (D) is added in the step (1).
[13] The manufacturing method according to any one of [9] to [12], in which a carbon powder (D) is added together with a thermosetting resin in the step (3).
[14] The manufacturing method according to any one of [9] to [13], in which the thermosetting resin is a water-soluble phenolic resin and/or a water-dispersible phenolic resin.

EFFECT OF THE INVENTION

The porous electrode substrate according to the invention is manufactured in the order of the "formation of a sheet-like material", the "heating and pressurizing treatment", thereafter the "addition of a thermosetting resin", and then the "carbonization by high-temperature calcination" by mixing the thermoplastic resin-containing fiber at the time of forming the sheet-like material unlike the conventional manufacturing method in which the "formation of a sheet-like material", the "addition of a thermosetting resin", thereafter the "heating and pressurizing treatment", and then the "carbonization by high-temperature calcination" are performed in this order. The thermosetting resin is uniformly attached in the in-plane direction and in the direction perpendicular to the plane as the heating and pressurizing treatment is not performed after the addition of the thermosetting resin, and it is thus possible to provide a porous electrode substrate which has a low bulk density and favorable handling property and gas permeability and has been thus hardly fabricated in the prior art. In addition, it is possible to provide a membrane electrode assembly and a polymer electrolyte fuel cell which include the porous electrode substrate.

BRIEF DESCRIPTION OF DRAWINGS

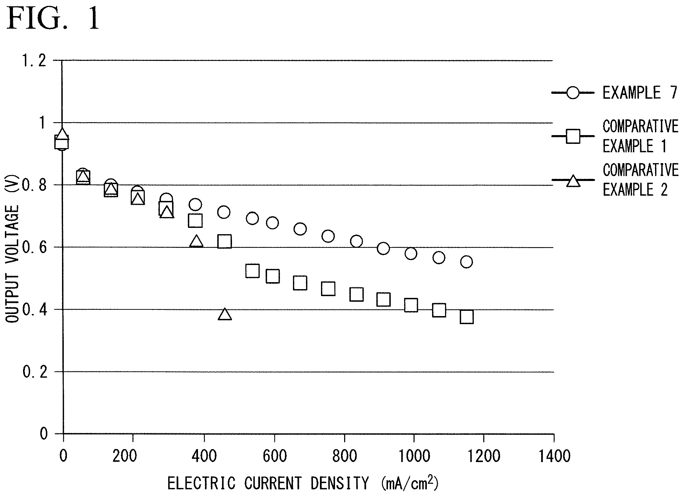

Fig. 1 is a graph showing the power generation characteristics of cell stacks of Examples and Comparative Examples when electricity is generated at 60°C by using hydrogen in the anode and air in the cathode.

MODE(S) FOR CARRYING OUT THE INVENTION

<<Porous Electrode Substrate>>

The porous electrode substrate obtained by the invention has a structure in which a carbon fiber (A) is bonded by a carbide. In addition, in the porous electrode substrate, the carbon fiber (A) forms a three-dimensional entangled structure. The shape of the porous electrode substrate can be selected from the shapes known in the field of fuel cell according to the need, and for example, the porous electrode substrate can take a shape such as a flat plate shape or a spiral shape.

Examples of the carbon fiber (A) constituting the porous electrode substrate of the invention may include those that are mentioned in the description on the manufacturing method for a porous electrode substrate to be described later.

In addition, examples of the carbide to bond the carbon fiber (A) may include a glassy carbide obtained by carbonizing a polymer compound at a high temperature of 1000°C or higher and a fibrous carbide obtained by carbonizing a carbon fiber precursor fiber (C) as a raw material at a high temperature of 1000°C or higher. The shape of the carbide is not particularly limited, and the carbon fiber (A) may be bonded by a glassy carbide, a fibrous carbide, or a combination thereof.

The "structure in which a carbon fiber (A) is bonded by a carbide" in the invention refers to a structure in which the carbon fibers (A) are bonded to each other by a carbide, and the carbide may be bonded to the contact portion between the carbon fibers (A), the carbide may be bonded so as to connect the carbon fibers (A) to each other, or a combination thereof may be used.

In addition, the three-dimensional entangled structure in the invention refers to a structure in which the carbon fiber (A) is present with respect to the horizontal plane of the porous electrode substrate at an angle of 3° or more on average or a maximum value of 10° or more in the vertical plane. Details of the measuring method are as described in WO 2012/060258 A.

The porous electrode substrate of the invention has a bulk density of $1.0 \times 10^{-1}$ g/cm$^3$ or more and $2.0 \times 10^{-1}$ g/cm$^3$ or less and a bending strength of 10 MPa or more at the time of applying a pressure of $1.5 \times 10^{-1}$ MPa thereto. It is difficult to handle the porous electrode substrate when the bulk density is too low, and it is thus preferably $1.1 \times 10^{-1}$ g/cm$^3$ or more. In addition, the gas permeability deteriorates when the bulk density is too high, and it is thus preferably $2.0 \times 10^{-1}$ g/cm$^3$ or less. The bulk density is more preferably $1.2 \times 10^{-1}$ g/cm$^3$ or more and $2.0 \times 10^{-1}$ g/cm$^3$ or less.

In addition, the porous electrode substrate of the invention preferably has a thickness of 50 $\mu$m or more and 500 $\mu$m or less at the time of applying a pressure of $1.5 \times 10^{-1}$ MPa thereto. It is difficult to handle the porous electrode substrate when the thickness is too thin, and it is thus more preferably 60 $\mu$m or more. In addition, it is difficult to wind the roll when the thickness is too thick, and it is thus more preferably 450 $\mu$m or less. It is still more preferably 80 $\mu$m or more and 400 $\mu$m or less.

In addition, the porous electrode substrate of the invention preferably has an air permeability of 500 ml/cm$^2$/hr/Pa or more in the thickness direction. The diffusibility of the fuel gas or the oxidizing gas deteriorates when the air permeability is too low, and it is thus more preferably 600 ml/cm$^2$/hr/Pa or more. The air permeability does not particularly have the upper limit, but it is preferably 3000 ml/cm$^2$/hr/Pa or less from the viewpoint of preventing drying of the electrolyte membrane.

In addition, the thickness of the porous electrode substrate of the invention at the time of applying a pressure of 3 MPa thereto is preferably 10% or more and 70% or less of the thickness of the porous electrode substrate at the time of applying a pressure of $5 \times 10^{-2}$ MPa thereto. The deflection of the separator into the gas flow path increases when this value is too low, and it is thus more preferably 20% or more. In addition, it is difficult to absorb the thickness accuracy of other members when assembling the fuel cell when this value is too high, and it is thus more preferably 60% or less.

In addition, the thickness of the porous electrode substrate when the pressure is decreased to $5\times10^{-2}$ MPa after a pressure of 3 MPa is applied to the porous electrode substrate is preferably 40% or more and 95% or less of the thickness of the porous electrode substrate when a pressure of $5\times10^{-2}$ MPa is applied before the pressure of 3 MPa is applied to the porous electrode substrate. The mechanical destruction at the time of compression is concerned when this value is too low, and it is thus more preferably 40% or more. In addition, this value does not have the upper limit, but it is more preferably 95% or less.

In addition, the porous electrode substrate of the invention preferably has an electric resistance value of 1.00 $m\Omega\cdot cm^2$ or more and 10.00 $m\Omega\cdot cm^2$ or less in the thickness direction at the time of applying a pressure of 3 MPa thereto. The electric resistance value does not have the lower limit, but it is more preferably 1.00 $m\Omega\cdot cm^2$ or more. In addition, the electric current collecting efficiency of electrons generated in the electrode catalyst deteriorates when this value is too high, and it is thus more preferably 10.00 $m\Omega\cdot cm^2$ or less.

The methods of measuring the thickness, bulk density, air permeability in the thickness direction, and bending strength of the porous electrode substrate at the time of applying a pressure of $5\times10^{-1}$ MPa thereto, the thickness of the porous electrode substrate at the time of applying a pressure of $5\times10^{-2}$ MPa thereto, the thickness of the porous electrode substrate at the time of applying a pressure of 3 MPa thereto, the electric resistance value in the thickness direction of the porous electrode substrate, and the thickness of the porous electrode substrate at the time of applying a pressure of $5\times10^{-2}$ MPa thereto measured after a pressure of 3 MPa is applied will be described later in the section of Examples.

<<Manufacturing Method for Porous Electrode Substrate>>

The porous electrode substrate described above can be fabricated by being manufactured in the order of the following steps (1) to (5).

Step (1): a step of manufacturing a precursor sheet having a carbon fiber (A) and a thermoplastic resin-containing fiber (B) dispersed.

Step (2): a step of obtaining a molded precursor sheet 1 by heating and pressurizing the precursor sheet to melt the thermoplastic resin-containing fiber (B) and to fuse the thermoplastic resin-containing fiber (B) with the carbon fiber (A) and molding the fused material.

Step (3): a step of adding a thermosetting resin to the molded precursor sheet 1 obtained.

Step (4): a step of obtaining a molded precursor sheet 2 by heating the molded precursor sheet 1 to which a thermosetting resin is added to cure the thermosetting resin contained.

Step (5): a step of obtaining a porous electrode substrate by carbonizing the molded precursor sheet 2 obtained at a temperature of 1000°C or higher.

The precursor sheet in the step (1) can further contain a carbon fiber precursor fiber (C) in addition to the carbon fiber (A) and the thermoplastic resin-containing fiber (B).

It is possible to include a step (6) of subjecting the precursor sheet to an entangling treatment between the step (1) and the step (2).

It is possible to further include a step (7) of subjecting the precursor sheet to a heat treatment between the step (6) and the step (2).

<Step (1): Step of Manufacturing Precursor Sheet Having Carbon Fiber (A) and Thermoplastic Resin-Containing Fiber (B) Dispersed>

For example, the carbon fiber (A) and the thermoplastic resin-containing fiber (B) may be dispersed and subsequently formed into a sheet, thereby forming a precursor sheet. For the formation of the precursor sheet, it is preferable to disperse the carbon fiber precursor fiber (C) together with the carbon fiber (A) and the thermoplastic resin-containing fiber (B), and the strength of the precursor sheet can be improved as the carbon fiber precursor fiber (C) is entangled. In other words, the precursor sheet can be composed of the carbon fiber (A) and the thermoplastic resin-containing fiber (B) or can be composed of the carbon fiber (A), the thermoplastic resin-containing fiber (B), and the carbon fiber precursor fiber (C).

Upon forming the precursor sheet, it is possible to employ a paper making method such as a wet method in which the carbon fiber (A) and the thermoplastic resin-containing fiber (B) or the carbon fiber (A), the thermoplastic resin-containing fiber (B), and the carbon fiber precursor fiber (C) are dispersed in a liquid medium and a sheet is formed or a dry method in which the carbon fiber (A) and the thermoplastic resin-containing fiber (B) or the carbon fiber (A), the thermoplastic resin-containing fiber (B), and the carbon fiber precursor fiber (C) are dispersed in the air and allowed to fall and pile up. A wet method is preferable from the viewpoint of the strength of the precursor sheet and uniformity of the fiber dispersion.

Examples of the method of mixing the carbon fiber (A) and the thermoplastic resin-containing fiber (B) or the carbon fiber (A), the thermoplastic resin-containing fiber (B), and the carbon fiber precursor fiber (C) may include a method of stirring and dispersing these in water and a method of directly mixing these, but a method of stirring and dispersing these in water is preferable from the viewpoint of uniform dispersion thereof. The strength of the precursor sheet is improved as the precursor sheet is manufactured by mixing the carbon fiber (A) and the thermoplastic resin-containing fiber (B) or the carbon fiber (A), the thermoplastic resin-containing fiber (B), and the carbon fiber precursor fiber (C) and forming the mixture into paper. In addition, it is possible to prevent that the carbon fiber (A) peels off from the precursor sheet during the sheet formation and the orientation of the carbon fiber (A) thus changes.

Examples of the medium for dispersing fibrous materials such as the carbon fiber (A), the thermoplastic resin-containing fiber (B), and the carbon fiber precursor fiber (C) may include a medium such as water or an alcohol which does not dissolve these fibrous materials, but water is preferable from the viewpoint of productivity.

The precursor sheet can be formed by either a continuous method or a batch method, but it is preferably formed by a continuous method from the viewpoint of the productivity and mechanical strength of the precursor sheet 1. The basis weight of the precursor sheet is preferably about from 10 to 200 g/m$^2$. The thickness of the precursor sheet is preferably about from 50 to 500 $\mu$m.

<Step (2): Step of Obtaining Molded precursor sheet 1 by Heating and Pressurizing Precursor Sheet to Melt Thermoplastic Resin-Containing Fiber (B) and to Fuse Thermoplastic Resin-Containing Fiber (B) with Carbon Fiber (A) and Molding Fused Material>

For the heating and pressurizing treatment, a roll press apparatus or continuous belt press apparatus capable of continuously molding the precursor sheet by heating and pressurization is generally used, but in the invention, it is preferable to use a continuous heating roll press apparatus having one or more pairs of rolls.

The heating temperature in the heating and pressurizing treatment is preferably from 80 to 250°C and more preferably from 100 to 200°C in order to promote fusion between the carbon fiber (A) and the thermoplastic resin-containing fiber (B) or among the carbon fiber (A), the thermoplastic resin-containing fiber (B), and the carbon fiber precursor fiber (C) in the precursor sheet.

The treatment speed in the heating and pressurizing treatment is preferably from 1 to 15 m/min and more preferably from 3 to 9 m/min in order to sufficiently progress fusion between the carbon fiber (A) and the thermoplastic resin-containing fiber (B) or among the carbon fiber (A), the thermoplastic resin-containing fiber (B), and the carbon fiber precursor fiber (C) in the precursor sheet.

The heating and pressurizing treatment of the precursor sheet is preferably performed at a linear pressure of 10 kg/cm or more and 300 kg/cm or less. By setting the linear pressure between the rolls to 10 kg/cm or more, it is possible to easily progress fusion between the carbon fiber (A) and the thermoplastic resin-containing fiber (B) or among the carbon fiber (A), the thermoplastic resin-containing fiber (B), and the carbon fiber precursor fiber (C). By setting the linear pressure to 300 kg/cm or less, it is possible to easily suppress breakage of the carbon fiber (A) at the time of molding by heating and pressurization. By continuously performing molding by heating and pressurization, it is also possible to continuously perform the carbonization treatment.

The thickness of the precursor sheet can be adjusted by controlling the clearance between the rolls as well as controlling the heating temperature, the treatment speed, and the linear pressure. In order to adjust the thickness of the precursor sheetl, molding may be performed by setting the clearance or molding may be performed by pressing and cutting without setting the clearance.

When heating pressurizing the precursor sheet, a release agent may be previously coated on each roll or a release paper may be sandwiched between the precursor sheet and each roll so that the carbon fiber (A), the thermoplastic resin-containing fiber (B), and the carbon fiber precursor fiber (C) are not attached to the roll.

The molded precursor sheet 1 is obtained in the manner described above.

<Step (3): Step of Adding Thermosetting Resin to Molded precursor sheet 1 Obtained>

The method of adding the thermosetting resin to the molded precursor sheet 1 is not particularly limited as long as it is a method capable of imparting a thermosetting resin to the molded precursor sheet 1.

Examples of the thermosetting resin may include those that are mentioned in the description on the manufacturing method for a porous electrode substrate to be described later. A water-dispersible phenolic resin and/or a water-soluble phenolic resin are preferable from the viewpoint of residual carbon efficiency and handling property.

For example, it is possible to use a method in which a thermosetting resin is uniformly coated on the surface of the molded precursor sheet 1 by using a coater and a method in which a molded precursor sheet 1 is impregnated with a thermosetting resin immersed in a tub.

In addition, it is also possible to impart the thermosetting resin to the molded precursor sheet 1 by discharge (spraying, dripping, or flowing down). For example, it is possible to use a method in which a thermosetting resin is sprayed or dripped onto the surface of the molded precursor sheet 1 by using a spraying nozzle, a method in which a thermosetting resin is allowed to flow down onto the surface of the molded precursor sheet 1 so as to be uniformly coated by using a discharge type coater such as a curtain coater, or the like. The method of supplying a liquid agent containing the thermosetting resin is not particularly limited, but it is possible to use, for example, pressure feeding by a pressurized tank, constant supply by a pump, and liquid agent sucking method utilizing the self-priming pressure.

It is preferable to use a two-fluid nozzle in which the liquid agent flow path and the gas flow path are separated from each other as the spraying nozzle from the viewpoint that the flow path is hardly clogged and the maintenance is easy. As such a nozzle, for example, it is possible to use a double-tube nozzle, a vortex type nozzle disclosed in JP 2007-244997 A, and the like. The gas to be used for spraying is not particularly limited as long as it does not react with the thermosetting resin or does not promote the curing of the thermosetting resin, but usually it is preferable to use compressed air.

As the dripping nozzle, it is possible to use a high pressure liquid jetting nozzle in addition to a needle tubular nozzle to be generally known as a dripping needle and the spraying nozzle described above.

Incidentally, it is preferable to concurrently use a squeezing (nipping) device in order to uniformly permeate the thermosetting resin discharged into the molded precursor sheet 1 or to remove excessive thermosetting resin. The thermosetting resin may be permeated into the molded precursor sheet 1 by blowing gas onto the surface of the molded precursor sheet 1 on which the thermosetting resin has been discharged (for example, sprayed) or sucking the thermosetting resin from the back surface of the molded precursor sheet 1 on which the thermosetting resin has been discharged instead of squeezing.

The addition of the thermosetting resin may be repeatedly performed plural times. In other words, the thermosetting resin may be further added after the thermosetting resin is added and the dispersion medium is then dried or the resin-added sheet (molded precursor sheet 1 to which the thermosetting resin is added) that is being formed may be turned inside out and the thermosetting resin may be added to the opposite side. In addition, these operations may be repeatedly performed. The number of addition of the thermosetting resin is not particularly limited, but it is preferable to decrease the number of addition from the viewpoint of cutting down the manufacturing cost. In the case of setting the number of addition to plural times, the same thermosetting resin may be used or thermosetting resins having different resin compositions and concentrations may be used as the thermosetting resin to be added. In addition, the amount of the thermosetting resin added may be uniform in the thickness direction of the molded precursor sheet 1 or may have a concentration gradient.

<Step (4): Step of Obtaining Molded precursor sheet 2 by Heating Molded precursor sheet 1 to Which Thermosetting Resin is Added to Cure Thermosetting Resin Contained>

The three-dimensional net-like crosslinked structure of the thermosetting resin is developed by the heat treatment, and the residual carbon ratio after the carbonization treatment step (5) can be increased.

In order to develop the three-dimensional net-like crosslinked structure of the thermosetting resin, it is preferable to heat the molded precursor sheet 1 at a temperature of from 30 to 300°C. The time for the heat treatment can be set, for example, to from 30 seconds to 24 hours.

The method of the heat treatment is not particularly limited, but it is possible to employ a direct heat treatment using a hot plate or a hot roll, a heat treatment using a high-temperature hot air furnace or a far infrared heating furnace. A heat treatment using a high-temperature hot air furnace or a far infrared heating furnace is preferable from the viewpoint of suppressing the attachment of the thermosetting resin added. In the case of subjecting the molded precursor sheet 1 that is continuously manufactured to a heat treatment, it is preferable to continuously perform the heat treatment over the entire length of the molded precursor sheet 1 from the viewpoint of manufacturing cost.

<Step (5): Step of Obtaining Porous Electrode Substrate by Carbonizing Molded precursor sheet 2 Obtained at Temperature of 1000°C or Higher>

The method of carbonizing the molded precursor sheet 2 may be a method in which the carbonization treatment is performed by continuously increasing the temperature from room temperature, and the carbonization treatment is performed at a temperature of 1000°C or higher. Incidentally, it is preferable to perform the carbonization treatment in an inert atmosphere and a temperature range of 1000°C or higher and 2400°C or lower from the viewpoint of imparting sufficient conductivity. Incidentally, a pre-carbonization treatment may be performed in a temperature range of 300°C or higher and lowers than 1000°C in an inert atmosphere before the carbonization treatment step is performed. It is preferable to perform the pre-carbonization treatment since it is possible to easily discharge the decomposed gas generated at the initial stage of carbonization and to easily suppress the attachment and deposition of the decomposed product onto the inner wall of the carbonization furnace.

The inert atmosphere refers to an atmosphere filled with a low reactive gas such as nitrogen or argon. It is preferable to perform this step in a nitrogen atmosphere from the viewpoint of manufacturing cost.

In the case of subjecting the molded precursor sheet 2 that is continuously manufactured to a carbonization treatment, it is preferable to continuously perform the carbonization treatment over the entire length of the molded precursor sheet 2 from the viewpoint of manufacturing cost. It is possible to cut down the manufacturing cost of the fuel cell when the porous electrode substrate is long since the productivity of the porous electrode substrate increases and the subsequent manufacture of a membrane electrode assembly (MEA) can also be continuously performed. In addition, it is preferable to continuously wind the porous electrode substrate manufactured from the viewpoint of productivity and manufacturing cost of the porous electrode substrate and the fuel cell.

<Step (6): Step of Subjecting Precursor Sheet to Entangling Treatment>

By subjecting the precursor sheet to an entangling treatment, it is possible to form a precursor sheet having a structure in which the carbon fiber (A) and the thermoplastic resin-containing fiber (B) are three-dimensionally entangled. In the case of dispersing the carbon fiber precursor fiber (C) together with the carbon fiber (A) and the thermoplastic resin-containing fiber (B) in the step (1), it is possible to form a precursor sheet having a structure in which the carbon fiber (A), the thermoplastic resin-containing fiber (B), and the carbon fiber precursor fiber (C) are three-dimensionally entangled by subjecting the precursor sheet to an entangling treatment.

The entangling treatment in which the carbon fiber (A) and the thermoplastic resin-containing fiber (B) or the carbon fiber (A), the thermoplastic resin-containing fiber (B), and the carbon fiber precursor fiber (C) in the precursor sheet are entangled is not particularly limited to a method to form an entangled structure, and for example, it is possible to use a mechanical entangling method such as a needle punching method, a high pressure liquid jetting method such as a water jet punching method, a high pressure gas jetting method such as a steam jet punching method, or a method by a combination thereof. A high pressure liquid jetting method is preferable from the viewpoint of being able to easily suppress the breakage of the carbon fiber (A) in the entangling step and to easily obtain proper entangling property. Hereinafter, this method will be described in detail.

The high pressure liquid jetting treatment method is a treatment method in which the precursor sheet is placed on a support member having a substantially smooth surface and, for example, a liquid columnar flow, a liquid fan flow, a liquid slit flow, or the like to be jetted at a pressure of 1 MPa is applied to the precursor sheet to entangle the carbon fiber (A) and the thermoplastic resin-containing fiber (B) or the carbon fiber (A), the thermoplastic resin-containing fiber (B), and the carbon fiber precursor fiber (C) in the precursor sheet. Here, as the support member having a substantially smooth surface, it is possible to select one among those that are not formed into the entangled structure from which the pattern of the support member is obtained and from which the liquid jetted is rapidly removed according to the need and to use it. Specific examples thereof may include a wire netting of 30 to 200 meshes, a plastic net, or a roll.

It is preferable to subject the precursor sheet to a high pressure liquid jetting treatment after being formed on the support member having a substantially smooth surface from the viewpoint of being able to continuously manufacture a precursor sheet having an entangled structure and of the productivity.

The liquid to be used in the high pressure liquid jetting treatment may be any solvent other than the solvent which dissolves the fibers constituting the precursor sheetl, but usually it is preferable to use water or warm water. The hole diameter of each jetting nozzle of the high pressure liquid jetting nozzles is preferably 0.06 mm or more and 1.0 mm or less and more preferably 0.1 mm or more and 0.3 mm or less in the case of a columnar flow. The distance between the nozzle jetting hole and the laminate is preferably 0.5 cm or more and 5 cm or less. The pressure of the liquid is preferably 1 MPa or more and more preferably 1.5 MPa or more. The entangling treatment may be performed in one row or in plural rows. In the case of performing the entangling treatment in plural rows, it is effective to increase the pressure in the high pressure liquid jetting treatment in the second and subsequent rows rather than in the first row.

The entangling treatment of the precursor sheet by high pressure liquid jetting may be repeatedly performed plural times. In other words, a precursor sheet may be further laminated on a precursor sheet after being subjected to the high pressure liquid jetting treatment and the laminate may be then subjected to the high pressure liquid jetting treatment or a precursor sheet that is being formed may be turned inside out and the opposite side thereof may be subjected to the high pressure liquid jetting treatment. In addition, these operations may be repeatedly performed.

In the case of continuously manufacturing a precursor sheet having an entangled structure, it is possible to suppress the formation of a stripe-like locus pattern attributed to the formation of a dense structure of the sheet in the sheet forming direction by vibrating a high pressure liquid jetting nozzle equipped with one row or plural rows of nozzle holes in the width direction of the sheet. It is possible to exert the mechanical strength in the sheet width direction by suppressing the stripe-like locus pattern in the sheet forming direction. In addition, in the case of using plural high pressure liquid jetting nozzles equipped with one row or plural rows of nozzle holes, it is also possible to suppress a periodic pattern appearing on the precursor sheet having an entangled structure by controlling the vibration frequency at which the high pressure liquid jetting nozzles are vibrated in the width direction of the sheet and the phase difference.

<Step (7): Step of Subjecting Precursor Sheet to Heat Treatment >

It is possible to subject the precursor sheet to a heat treatment between the step (6) of subjecting the precursor sheet to an entangling treatment and the step (2) of obtaining the molded precursor sheet 1 by heating and pressurizing the precursor sheet to melt the thermoplastic resin-containing fiber (B) and to fuse the thermoplastic resin-containing fiber (B) with the carbon fiber (A) and molding the fused material. This increases the strength of the precursor sheet and improves the handling property in the subsequent step.

It is preferable to heat the sheet-like material at a temperature of from 30 to 300°C from the viewpoint of removing the dispersion medium from the precursor sheet. The time for the heat treatment can be set, for example, to from 30 seconds to 24 hours.

The method of the heat treatment is not particularly limited, but it is possible to employ a direct heat treatment using a hot plate or a hot roll, a heat treatment using a high-temperature hot air furnace or a far infrared heating furnace. A heat treatment using a high-temperature hot air furnace or a far infrared heating furnace is preferable from the viewpoint of suppressing the attachment of the fibers constituting the precursor sheet. In the case of subjecting the precursor sheet that is continuously manufactured to a heat treatment, it is preferable to continuously perform the heat treatment over the entire length of the precursor sheet from the viewpoint of manufacturing cost.

<Carbon Fiber (A)>

The carbon fiber (A) which is one fiber constituting the porous electrode substrate can be entangled in the thickness direction in the precursor sheet and the porous electrode substrate. Examples of the carbon fiber (A) may include those obtained by cutting a carbon fiber such as a polyacrylonitrile-based carbon fiber (hereinafter referred to as the "PAN-based carbon fiber"), a pitch-based carbon fiber, or a rayon-based carbon fiber into a proper length. A PAN-based carbon fiber is preferable from the viewpoint of the mechanical strength of the porous electrode substrate.

The average fiber length of the carbon fiber (A) is preferably from 2 to 12 mm from the viewpoint of dispersibility. The average fiber diameter of the carbon fiber (A) is preferably from 3 to 20 $\mu$m from the viewpoint of the production cost and dispersibility of the short carbon fiber, and it is more preferably from 4 to 18 $\mu$m from the viewpoint of the smoothness of the porous electrode substrate. Incidentally, the average fiber diameter can be measured by using an optical microscope and an electron microscope.

<Thermoplastic Resin-Containing Fiber (B)>

The thermoplastic resin-containing fiber (B) refers to a fiber containing a thermoplastic resin component at 20% or more. Examples of the raw material containing a thermoplastic resin component may include vinyl chloride, vinyl acetate, polyvinyl alcohol, polyvinyl butyral, polystyrene, an ABS resin, polymethyl methacrylate, polyphenylene oxide, polyurethane, cellulose, polyethylene, polypropylene, polybutylene terephthalate, polyethylene terephthalate, nylon, rayon, polycarbonate, polyacetal, polyphenylene sulfide, polyacrylonitrile, polyamide, polyether sulfone, polyphenylene ether, and polysulfone.

As the thermoplastic resin-containing fiber (B), a fiber composed of a simple substance of the raw materials described above or a fiber composed of two or more kinds of raw materials including the raw materials described above may be used. Examples of the fiber composed of two or more kinds of raw materials including a raw material having a thermoplastic resin component may include a fiber having a two-layer structure of a core and a sheath and a fibrillar fiber (E-2) having a sea-island structure to be described later.

For the formation of the precursor sheet, it is indispensable to mix at least one kind of thermoplastic resin-containing fiber (B) but two or more kinds of thermoplastic resin-containing fibers (B) may be mixed. The average fiber length of the thermoplastic resin-containing fiber (B) is preferably 2 mm or more and 20 mm or less from the viewpoint of dispersibility. Incidentally, the average fiber length can be measured by using an optical microscope and an electron microscope.

<Carbon Fiber Precursor Fiber (C)>

The carbon fiber precursor fiber (C) can be one obtained by cutting a carbon fiber precursor long fiber fabricated by using a polymer (for example, an acrylic polymer) to be described later to a proper length. The average fiber length of the carbon fiber precursor fiber (C) is preferably 2 mm or more and 20 mm or less from the viewpoint of dispersibility. Incidentally, the average fiber length can be measured by using an optical microscope and an electron microscope. The cross-sectional shape of the carbon fiber precursor fiber (C) is not particularly limited, but it is preferably one having high circularity from the viewpoint of the mechanical strength after carbonization and the manufacturing cost.

The acrylic polymer to be used in the carbon fiber precursor fiber (C) may be a homopolymer of acrylonitrile or a copolymer of acrylonitrile with another monomer. The monomer to be copolymerized with acrylonitrile is not particularly limited as long as it is an unsaturated monomer constituting a general acrylic fiber, and examples thereof may include acrylic acid esters typified by methyl acrylate, ethyl acrylate, isopropyl acrylate, n-butyl acrylate, 2-ethylhexyl acrylate, 2-hydroxyethyl acrylate, and hydroxypropyl acrylate; methacrylic acid esters typified by methyl methacrylate, ethyl methacrylate, isopropyl methacrylate, n-butyl methacrylate, isobutyl methacrylate, t-butyl methacrylate, n-hexyl methacrylate, cyclohexyl methacrylate, lauryl methacrylate, 2-hydroxyethyl methacrylate, hydroxypropyl methacrylate, and diethylaminoethyl methacrylate; acrylic acid, methacrylic acid, maleic acid, itaconic acid, acrylamide, N-methylol acrylamide, diacetone acrylamide, styrene, vinyltoluene, vinyl acetate, vinyl chloride, vinylidene chloride, vinylidene bromide, vinyl fluoride, and vinylidene fluoride.

The polymer constituting the carbon fiber precursor fiber (C) preferably has a residual mass of 20% by mass or more in the step performing a carbonization treatment from the viewpoint of maintaining the sheet shape after carbonization. Examples of such a polymer may include an acrylic polymer, a cellulose-based polymer, and a phenolic polymer. It is preferable to use an acrylic polymer containing an acrylonitrile unit at 50% by mass or more in consideration of the spinnability, the fact that the carbon fibers (A) can be bonded to each other from a low temperature through a high temperature, and the fact that the residual mass at the time of carbonization is large.

The weight average molecular weight of the acrylonitrile-based polymer to be used in the carbon fiber precursor fiber (C) is not particularly limited, but it is preferably from 50,000 to 1,000,000. The spinnability tends to be improved and at the same time the fiber quality tends to be favorable as the weight average molecular weight is 50,000 or more. The polymer concentration providing the optimum viscosity of the spinning dope tends to increase and the productivity tends to be improved as the weight average molecular weight is 1,000,000 or less.

It is possible to adjust the proportion of the carbon fiber remaining in the porous electrode substrate to be finally obtained by the mixing ratio of the carbon fiber (A) to the carbon fiber precursor fiber (C).

As the carbon fiber precursor fiber (C) to be used in the invention, a fiber having a fibrillar shape (fibrillar fiber (E)) or a fiber which does not have a fibrillar shape may be used.

<Fibrillar Fiber (E)>

The fibrillar fiber (E) is a fiber having fine raised piles due to fluff, and the fibrillar fiber (E) can play a role of preventing bundling of the carbon fiber (A) to be mixed and improving the strength of the sheet-like material. In addition, there are those that produce condensation water at the time of resin curing depending on the thermosetting resin to be used, but the fibrillar fiber (E) can also be expected to play a role of absorbing and discharging the water. Hence, those exhibiting excellent affinity for water are preferable. Specific examples of the fibrillar fiber (E) may include a fibrillated polyethylene fiber, an acrylic fiber, an aramid fiber, and a cellulose fiber.

As the fibrillar fiber (E), it is possible to use a fiber having a structure in which plural fibrils having a diameter of several $\mu$m or less (for example, 0.1 to 3 $\mu$m) are branched out from the fibrous trunk, a fiber fibrillated by a beating treatment of an easily splittable sea-island composite fiber, or the like. By using the fibrillar fiber (E), the carbon fiber (A) and the fibrillar fiber (E) are favorably entangled in the sheet-like material and it is thus possible to obtain a sheet-like material having an excellent mechanical strength. The freeness of the fibrillar fiber (E) is not particularly limited, but the mechanical strength of the sheet-like material tends to be improved but the gas permeability of the porous electrode substrate tends to decrease when the fibrillar fiber (E) having a low freeness is used. Incidentally, these two fibrillar fibers (E) will be hereinafter referred to as a fiber (E-1) and a fiber (E-2), respectively, and will be described in detail.

• Fibrillar Fiber (E-1) Having Structure in Which Plural Fibrils Are Branched

The manufacturing method for the fiber (E-1) is not particularly limited, but it is preferable to use a jet coagulation method which facilitates the control of freeness. The fiber (E-1) by the jet coagulation method can be manufacture, for example, by the following method.

First, an acrylonitrile-based copolymer is dissolved in a solvent to prepare a spinning dope. As this solvent, for example, dimethylamide, dimethylformamide, and dimethylsulfoxide can be used. Subsequently, this spinning dope is discharged into the mixing cell through the spinning discharge port and at the same time water vapor is jetted into the mixing cell at an angle of 0° or more and less than 90° with respect to the discharge line direction of the spinning dope, and this acrylonitrile-based copolymer is coagulated in this mixing cell at a shear flow rate. The coagulated body thus formed is discharged from the mixing cell together with the solvent and water vapor into the coagulating liquid to obtain a fiber (E-1). As the coagulating liquid, water or a mixed liquid of water with the solvent described above can be used.

The fiber (E-1) thus obtained has a fibril portion in which fibers having a smaller fiber diameter are gathered and a thick core portion (trunk) which is coagulated without being touched with water vapor and thus has a larger fiber diameter. The fibril portion of the fiber (E-1) improves entanglement of the carbon fiber (A) with the fibril portions of the fiber (E-1), and the core portion of the fiber (E-1) can exert strength as a binder.

The fiber diameter of the fibril portion of the fiber (E-1) is preferably 2 $\mu$m or less in order to improve entanglement with the carbon fiber (A) to be mixed.

The diameter of the core portion is preferably 100 $\mu$m or less from the viewpoint of homogenization of the porous electrode substrate. By setting the diameter to 100 $\mu$m or less, it is possible to easily suppress uneven distribution of the fiber (E-1) and to easily bind the carbon fiber (A) by a relatively small amount of fiber (E-1). In addition, the diameter of the core portion is preferably 10 $\mu$m or more from the viewpoint of exerting strength.

From the viewpoint of the function that the fiber (E-1) is entangled with the carbon fiber (A), it is preferable that there are plural fibril portions of the fiber (E-1) with respect to one core portion, and it is considered that it is more preferable as the number of fibril portions with respect to one core portion is larger.

In one fiber (E-1), the thickness of the core portion is preferably constant or steplessly changes. By using such a fiber (E-1), it is possible to easily prevent weakening of the step portion due to a stepwise change in the thickness of the core portion and to easily prevent a decrease in the strength. Incidentally, in the case of manufacturing the fiber (E-1) by the above method, there is a case in which it is difficult to keep the thickness of the core portion constant as the water vapor randomly scatters and the thickness of the core portion thus changes in some cases. However, the stepwise change in the thickness of the core portion tends to be seen in a case in which the water vapor to be jetted cools down to form a droplet, and it is thus possible to easily prevent a stepwise change in the thickness of the core portion by a method to increase the jet pressure and temperature of water vapor.

• Fibrillar Fiber (E-2) Fibrillated by Beating Treatment

The fiber (E-2) is one obtained by cutting a long easily splittable sea-island composite fiber into a proper length and beating and fibrillating the cut fiber by a refiner, pulper, or the like. The long easily splittable sea-island composite fiber can be manufactured by using two or more kinds of heterogeneous polymers which dissolve in a common solvent but are incompatible with each other, and it is preferable that at least one kind of polymer is carbonized and has a residual mass of 20 mass% or more in the carbonization treatment step. Examples of those having a residual mass of 20 mass% or more in the carbonization treatment step among the polymers to be used in the easily splittable sea-island composite fiber may include an acrylic polymer, a cellulose-based polymer, and a phenolic polymer. Among these, it is preferable to use an acrylic polymer containing an acrylonitrile unit at 50% by mass or more from the viewpoint of spinnability and residual mass in the carbonization treatment step.

In the case of using the acrylic polymer described above as a polymer having a residual mass of 20 mass% or more in the carbonization treatment step of one kind among the polymers to be used in the easily splittable sea-island composite fiber, it is desirable that another polymer is a polymer which dissolves in a common solvent together with the acrylic polymer and the spinning dope in which both polymers are dissolved stably exists. In other words, it is desirable that another polymer is incompatible with the acrylic polymer in the case of being dissolved in a common solvent together with the acrylic polymer but exhibits miscibility enough to form a sea-island structure at the time of spinning. This makes it easy to prevent fiber inhomogeneity that occurs in a case in which the degree of incompatibility of the two kinds of polymers is large when forming a spinning dope, and this makes it possible to easily prevent yarn breakage at the time of spinning and further to facilitate fiber shaping. In addition, it is desirable that another polymer is hardly soluble in water, and this makes it easy to prevent another polymer from dissolving in water in the coagulation tank and the washing tank and from dropping out in the case of performing wet spinning.

Examples of another polymer which satisfies these requirements may include polyvinyl chloride, polyvinylidene chloride, polyvinylidene fluoride, polyvinyl pyrrolidone, cellulose acetate, an acrylic resin, a methacrylic resin, and a phenolic resin, but cellulose acetate, an acrylic resin, and a methacrylic resin are preferable from the viewpoint of balance among the requirements described above. The other polymer may be one kind or two or more kinds.

The easily splittable sea-island composite fiber to be used in the fiber (E-2) can be manufactured by a usual wet spinning method. First, an acrylic polymer and another polymer are dissolved in a solvent to prepare a spinning dope. Alternatively, a spinning dope prepared by dissolving an acrylic polymer in a solvent may be mixed with a spinning dope prepared by dissolving another polymer in a solvent by using a static mixer or the like to prepare a spinning dope. As the solvent, dimethylamide, dimethylformamide, dimethylsulfoxide, or the like can be used. These spinning dopes are supplied to a spinning machine, spun through a nozzle, and subjected to wet heat drawing, washing, drying, and dry heat drawing to obtain an easily splittable sea-island composite fiber.

The cross-sectional shape of the easily splittable sea-island composite fiber is not particularly limited. In order to suppress dispersibility and breakage due to shrinkage at the time of carbonization, the fineness of the easily splittable sea-island composite fiber is preferably 1 dtex or more and 10 dtex or less. The average fiber length of the easily splittable sea-island composite fiber is preferably 1 mm or more and 20 mm or less from the viewpoint of dispersibility after beating.

The easily splittable sea-island composite fiber is beaten by peeling off at the phase separation interface by a mechanical external force, and at least a part thereof is split and fibrillated. The beating method is not particularly limited, but the easily splittable sea-island composite fiber can be fibrillated, for example, by a refiner, a pulper, a beater, or a jet of pressurized water flow (water jet punching). When beating the easily splittable sea-island composite fiber by peeling off at the phase separation interface by a mechanical external force, the state of fibrillation changes depending on the beating method and the beating time. As a method of evaluating the degree of fibrillation, it is possible to use the evaluation on freeness (JIS P8121 (pulp freeness test method: Canadian standard type)). The freeness of the fiber (E-2) is not particularly limited.

<Thermosetting Resin>

Examples of the thermosetting resin to be used in the invention may include a phenolic resin, a furan resin, and an epoxy resin, but a water-soluble phenolic resin and/or a water-dispersible phenolic resin is preferable from the viewpoints of cost, residual carbon efficiency, and handling property.

<Water-Soluble Phenolic Resin>

As the water-soluble phenolic resin to be used in the invention, it is possible to use a known water-soluble phenolic resin, for example, a resol- type phenolic resin which exhibits favorable water solubility and is disclosed in JP 2009-84382 A and the like. Specific examples thereof may include PHENOLITE GG-1402: trade name manufactured by DIC Corporation, RESITOP PL-5634 and PL-6781: trade name manufactured by GUN EI Chemical Industry Co., Ltd., Sumilite Resin PR-50781, PR-9800 D, PR-55386, and PR-50607 B: trade name manufactured by Sumitomo Bakelite Co., Ltd., and Shownol BRL-1583, BRL-120 Z, and BRL-2854: trade name manufactured by SHOWA DENKO K.K. The water-soluble phenolic resin is likely to bind the carbon fiber (A) at the stage of being carbonized in the same manner as a general phenolic resin using methanol or methyl ethyl ketone as a solvent, and it is likely to remain as a conductive substance.

As the form for obtaining the water-soluble phenolic resin, it is preferable to use one that is in the form of an aqueous solution and is easily available as a commercial product from the viewpoint of handling property and manufacturing cost. A commercially available water-soluble phenolic resin contains an organic solvent and an unreacted monomer which are not removed but remain in smaller amounts than in a general phenolic resin at the time of manufacture. In other words, the amounts of the organic solvent and the unreacted monomer which volatilize at the time of the drying treatment or the heating and pressurizing treatment are small, and it is thus possible to cut down the manufacturing cost as the exhaust equipment is simplified, and the like.

<Water-Dispersible Phenolic Resin>

As the water-dispersible phenolic resin to be used in the invention, it is possible to use, for example, a resol-type phenolic resin emulsion disclosed in JP 2004-307815 A, JP 2006-56960 A, and the like or a known water-dispersible phenolic resin to be also called an aqueous dispersion. Specific examples thereof may include PHENOLITE TD-4304 and PE-602: trade name manufactured by DIC Corporation, Sumilite Resin PR-14170 and PR-55464: trade name manufactured by Sumitomo Bakelite Co., Ltd., and Shownol BRE-174: trade name manufactured by SHOWA DENKO K.K. The water-dispersible phenolic resin is likely to bind the carbon fiber (A) at the stage of being carbonized in the same manner as a general phenolic resin using methanol or methyl ethyl ketone as a solvent, and it is likely to remain as a conductive substance.

As the form for obtaining the water-dispersible phenolic resin, it is preferable to use one that is in the form of an aqueous solution and is easily available as a commercial product from the viewpoint of handling property and manufacturing cost. A commercially available water-dispersible phenolic resin contains an organic solvent and an unreacted monomer which are not removed but remain in smaller amounts than in a general phenolic resin at the time of manufacture. In other words, the amounts of the organic solvent and the unreacted monomer which volatilize at the time of the drying treatment or the heating and pressurizing treatment are small, and it is thus possible to cut down the manufacturing cost as the exhaust equipment is simplified, and the like.

The thermosetting resin to be used in the resin adding step (3) described above is preferably in the form of a dispersion or an aqueous solution from the viewpoint of permeability into the sheet. The concentration of the solids of the thermosetting resin in the dispersion or the aqueous solution is preferably 1% by mass or more from the viewpoint of the strength of the porous electrode substrate and the exertion of conductivity, and it is preferably 50% by mass or less in order to obtain a dispersion having a low viscosity and high permeability.

As a medium for diluting or dispersing the thermosetting resin obtained, it is preferable to use water, an alcohol, or a mixture thereof from the viewpoint of handling property and manufacturing cost. In addition, it is more preferable to use water as the main component from the viewpoint of productivity, protection of the atmospheric environment, and protection of the human body environment.

In addition, a carbon powder (D) may be added to the thermosetting resin for the purpose of improving the sheet strength and decreasing the electric resistance value. A carbon powder (D) may be used singly, or different kinds of carbon powders may be used in combination.

<Carbon Powder (D)>

As the carbon powder (D), it is preferable to use a graphite powder, carbon black, a milled fiber, or a mixture thereof from the viewpoint of decreasing the electric resistance value.

The graphite powder has a highly crystalline graphite structure, and the average particle diameter of the primary particles thereof is generally from several micrometers to several hundreds of micrometers. As the graphite powder, it is possible to use pyrolytic graphite, spherical graphite, flaky graphite, bulky graphite, earthy graphite, artificial graphite, expanded graphite, and the like, but pyrolytic graphite, spherical graphite, or flaky graphite is preferable from the viewpoint of exerting conductivity.

In general, carbon black is present as a structure (agglomerate) in which primary particles having an average particle diameter of several tens of nanometers are fused with each other to form a structure and the structures are further bonded to each other by van der Waals' force. The carbon black has a significantly larger number of particles per unit mass than that of a graphite powder, and the agglomerates thereof are connected in a three-dimensional network shape at a certain critical concentration or more to form a macroscopic conductive path. As the carbon black, it is possible to use furnace black, channel black, acetylene black, lamp black, thermal black, and ketjen black, but acetylene black or ketjen black which exhibits excellent electric conductivity is preferable.

As the milled fiber, one manufactured by pulverizing a virgin carbon fiber or one manufactured from a recycled product such as a carbon fiber-reinforced thermosetting resin molded product, a carbon fiber-reinforced thermoplastic resin molded product, or a prepreg may be used.

«Membrane Electrode Assembly (MEA) and Polymer Electrolyte Fuel Cell »

The porous electrode substrate of the invention can be suitably used in a membrane electrode assembly of a polymer electrolyte fuel cell. In addition, the membrane electrode assembly using the porous electrode substrate of the invention can be suitably used in a polymer electrolyte fuel cell.

EXAMPLES

Hereinafter, the invention will be described more specifically with reference to Examples. The physical property values and the like in Examples were measured by the following methods. The results are presented in Tables 1 and 2.

(1) Thickness (When Applying Pressure of $1.5 \times 10^{-1}$ MPa)

The thickness of the porous electrode substrate was measured by using a thickness measuring device DIAL THICKNESS GAUGE (trade name: 7321 manufactured by Mitutoyo Corporation). The size of the gauge head was 10 mm in diameter and the measuring pressure was set to $1.5 \times 10^{-1}$ MPa.

(2) Bulk Density

The bulk density of the porous electrode substrate was calculated as follows from the basis weight of the porous electrode substrate and the thickness of the porous electrode substrate (at the time of applying a pressure of $1.5 \times 10^{-1}$ MPa).

$$\text{Bulk density (g/cm}^3) = \text{basis weight (g/m}^2)/\text{thickness (}\mu\text{m).}$$

(3) Air Permeability in Thickness Direction

It is determined by a method conforming to JIS standard P-8117. By using the Gurley Densometer, a test piece (porous electrode substrate) was sandwiched between cells having holes with a diameter of 3 mm, 200 mL of air was allowed to flow through the hole at a pressure of 1.29 kPa, the time taken for the air to permeate through the test piece was measured, and the air permeability was calculated by the following formula.

$$\text{Gas permeability } (mL/hr/cm^2/Pa) = \text{amount of gas permeated } (mL)/\text{permeation}$$

$$\text{time } (hr)/\text{area of permeation hole } (cm^2)/\text{permeation pressure } (Pa).$$

(4) Bending Strength

The bending strength of the porous electrode substrate was measured as follows by using a universal testing machine (trade name: SV201NA manufactured by IMADA SEISAKUSHO CO., LTD.). First, a test piece (porous electrode substrate) having a length of 80 mm and a width of 10 mm was prepared so that the long side of the test piece was parallel to the longitudinal direction of the porous electrode substrate to be obtained by the step (5), and the test piece was set at the lower part (distance between fulcrums: 20 mm) of a jig for three-point bending test. Subsequently, the upper part of the jig for three-point bending test was lowered, and a load was applied to the test piece positioned at the center part between the fulcrums. The application of the load was immediately stopped when the test piece was broken, the value of the bending stress at the time of breakage was read, and the bending strength was determined from the value by the following formula.

$$\text{Bending strength } (MPa) = 1.5 \times \text{bending stress } (N) \times \text{distance between fulcrums}$$

$$(mm)/\text{transverse distance } (mm)/(\text{thickness of test piece})^2 \ (mm^2)$$

(5) Thickness When Applying Pressure of $5 \times 10^{-2}$ MPa, $5 \times 10^{-2}$ MPa (After Application of Pressure of 3 MPa), and 3 MPa

The thickness of the porous electrode substrate was measured as follows by using a microautograph small size test piece compression testing device (trade name: MST-I manufactured by Shimadzu Corporation). A load rod was lowered at a stroke speed of 0.4 mm/min without sandwiching anything between the upper platen (fixed type) having a diameter of 50 mm and the degree of parallelization adjusted in advance and the lower platen (ball seat type) having a diameter of 50 mm. The stroke of the load rod was immediately stopped when a pressure of $5 \times 10^{-2}$ MPa was applied, and the values on three displacement gauges between the platens were all set to zero. Subsequently, a test piece (porous electrode substrate) having a diameter of 25 mm was placed between the upper platen and the lower platen, and the load rod was lowered at a stroke speed of 0.4 mm/min. A pressure was applied to the test piece in the order of $5 \times 10^{-2}$ MPa, 3 MP, and $5 \times 10^{-2}$ MPa, the stroke of the load rod was stopped at the time of applying each of the pressures, the values on the three displacement gauges after 30 seconds were read, and the average values thereof were taken as the thicknesses at the time of applying a pressure of $5 \times 10^{-2}$ MPa, $5 \times 10^{-2}$ MPa (after application of a pressure of 3 MPa), and 3 MPa.

(6) Electric Resistance Value When Applying Pressure of 3 MPa

The electric resistance value in the thickness direction (resistance in the penetration direction) of the porous electrode was determined as follows. The porous electrode substrate was sandwiched between gold-plated copper plates, pressurized from above and below the copper plates at 3 MPa, an electric current was allowed to pass at an electric current density of 10 mA/cm$^2$ to measure the resistance value, and the electric resistance value was calculated by the following formula.

$$\text{Electric resistance value } (m\Omega \cdot cm^2) = \text{resistance value measured } (m\Omega) \times \text{area of}$$

$$\text{sample } (cm^2).$$

(Example 1)

As the carbon fiber (A), a PAN-based carbon fiber having an average fiber diameter of 7 $\mu$m and an average fiber length of 3 mm was prepared. In addition, as the thermoplastic resin-containing fiber (B), an easily splittable acrylic sea-island composite short fiber obtained by fibrillating an easily splittable sea-island composite fiber composed of an acrylic polymer and methyl methacrylate (PMMA) through beating (trade name: Vonnel M.VP.-C 300, average fiber length: 3 mm, manufactured by Mitsubishi Rayon Co., Ltd.) was prepared. In addition, as the acrylic fiber precursor fiber (C), a short acrylic fiber (trade name: HI00, average fiber length: 5 mm manufactured by Mitsubishi Rayon Co., Ltd.,)

was prepared. The manufacture of a three-dimensional entangled structure by the formation and entangling treatment of a sheet-like material was performed by the following wet continuous papermaking method and an entangling treatment method by a continuous pressurized water flow jetting treatment.

The formation of a sheet-like material and the manufacture of a sheet-like material having an entangled structure were performed by the following operations (1) to (10).

(1) Disintegration of Carbon Fiber (A)

The carbon fiber (A) was dispersed in water so as to have a fiber concentration of 1% (10 g/L) and allowed to pass through a disc refiner (manufactured by KUMAGAYA RIKI KOGYO Co., Ltd.) for the disintegration treatment, thereby obtaining a disintegrated slurry fiber (SA).

(2) Beating and Disintegration of Thermoplastic Resin-Containing Fiber (B)

The thermoplastic resin-containing fiber (B) was dispersed in water so as to have a fiber concentration of 1% (10 g/L) and allowed to pass through a disc refiner (manufactured by KUMAGAI RIKI KOGYO Co., Ltd.) for the beating and disintegration treatment, thereby obtaining a disintegrated slurry fiber (SB).

(3) Disintegration of Carbon Fiber Precursor Fiber (C)

The carbon fiber precursor fiber (C) was dispersed in water so as to have a fiber concentration of 1% (10 g/L) and allowed to pass through a disc refiner (manufactured by KUMAGAI RIKI KOGYO Co., Ltd.) for the disintegration treatment, thereby obtaining a disintegrated slurry fiber (SC).

(4) Preparation of Slurry for Papermaking

The disintegrated slurry fiber (SA), the disintegrated slurry fiber (SB), the disintegrated slurry fiber (SC), and dilution water were weighed and prepared in a slurry tank such that the mass ratio among the carbon fiber (A), the thermoplastic resin-containing fiber (B), and the carbon fiber precursor fiber (C) was 60: 20: 20 and the concentration of fiber in the slurry was 0.8 g/L. Furthermore, a polyacrylamide was added thereto to prepare a slurry for papermaking having a viscosity of 22 mPa·s (centipoise).

(5) Manufacture of Precursor Sheet

A treatment apparatus consisting of a sheet-like material conveying device consisting of a net that connected a net driving unit with a plastic net plain weave mesh having a width of 60 cm and a length of 585 cm in a belt shape and continuously rotated the resultant, a device for supplying the slurry for papermaking having a width of the slurry supplying part of 48 cm, and a vacuum dewatering device disposed at the lower part of the net was used.

The slurry for papermaking was supplied onto the plain weave mesh by using a metering pump. The slurry for papermaking was allowed to pass through a flow box for rectifying into a uniform flow to widen the width to a predetermined size and the supplied. Thereafter, the slurry was allowed to pass through the part at which natural dehydration was performed and dehydrated by a vacuum dehydrating device, thereby obtaining a precursor sheet.

(6) Entangling Treatment of Precursor Sheet

A pressurized water flow jetting treatment apparatus equipped with the following three water jet nozzles (nozzles 1 to 3) was disposed downstream of the treatment apparatus.

Nozzle 1: hole diameter $\phi$ (diameter) of 0.15 mm $\times$ 501 holes, pitch between holes in width direction of 1 mm (1001 holes/1 m of width), arranged in one row, and effective nozzle width of 500 mm.

Nozzle 2: hole diameter $\phi$ of 0.15 mm $\times$ 501 holes, pitch between holes in width direction of 1 mm (1001 holes/1 m of width), arranged in one row, and effective nozzle width of 500 mm.

Nozzle 3: hole diameter $\phi$ of 0.15 mm $\times$ 1002 holes, pitch between holes in width direction of 1.5 mm, arranged in three rows, pitch between rows of 5 mm, and effective nozzle width of 500 mm.

The precursor sheet was put on the net of the pressurized water flow jetting treatment apparatus. The pressurized water flow jetting pressure was set to 1 MPa (nozzle 1), 2 MPa (nozzle 2), and 3 MPa (nozzle 3), and the wet paper web was allowed to pass through the nozzle 1, the nozzle 2, and the nozzle 3 in this order for the entangling treatment.

(7) Heat Treatment of Precursor Sheet Subjected to Entangling Treatment

The precursor sheet after being subjected to the entangling treatment was dried by being brought into contact with a hot roll at 120°C for 3 minutes using a thermal calender roll machine (manufactured by YURIROLL Co., Ltd.), thereby obtaining a sheet-like material having a basis weight of 48 g/m$^2$. The dispersion state of the carbon fiber (A), the thermoplastic resin-containing fiber (B), and the carbon fiber precursor fiber (C) in this sheet-like material was favorable, the entanglement of both fibers was also favorable, and the handling property was favorable.

(8) Molding Treatment of Precursor Sheet

The precursor sheet was continuously molded by using a thermal calender roll machine (manufactured by YURIROLL Co., Ltd.) at a roll temperature of 140°C and a speed of 3.0 m/min, thereby obtaining a molded precursor sheet 1. It was possible to confirm that the carbon fiber (A) was not broken by pressurization and the carbon fiber (A), the thermoplastic resin-containing fiber (B), and the carbon fiber precursor fiber (C) were effectively fused with one another through the observation of the surface after molding.

(9) Addition of Thermosetting Resin, Drying, and Curing Treatment

Next, an aqueous solution of a resol-type phenolic resin (product name: PHENOLITE GG-1402 manufactured by DIC Corporation) was prepared as a thermosetting resin and a graphite powder (trade name: flaky GRAPHITE Z-5F manufactured by Ito Graphite Co., Ltd.,) was prepared as a carbon powder, and a resin and graphite added liquid was prepared such that the ratio of resin solid was 70% and the ratio of graphite solid was 30% in the entire solids in the aqueous solution. The molded precursor sheet 1 was impregnated with the resin and graphite added liquid, and the water in the sheet was dried by using an IR heat treatment furnace (manufactured by NGK INSULATORS, LTD.), and further the resin in the sheet was cured. As a result, a molded precursor sheet 2 in which the resin and graphite solids were attached at 47% by mass with respect to the basis weight of the molded precursor sheet 1 was obtained.

(10) Carbonization Treatment

The molded precursor sheet 2 was carbonized at 2000°C in an inert gas (nitrogen) atmosphere, thereby obtaining a porous carbon electrode base material.
In the porous electrode substrate thus obtained, the breakage of carbon short fibers and in-plane shrinkage at the time of the carbonization treatment were not observed, and the porous electrode substrate exhibited favorable handling property, gas permeability, and resistance in the penetration direction.

(Example 2)

A porous electrode substrate was obtained in the same manner as in Example 1 except the following points.

- A precursor sheet having a basis weight of 50 g/m$^2$ was obtained at the time of papermaking.
- A molded precursor sheet 2 in which the resin and graphite solids were attached at 51% by mass with respect to the basis weight of the molded precursor sheet 1 was obtained.

In the porous electrode substrate thus obtained, the breakage of carbon short fibers and in-plane shrinkage at the time of the carbonization treatment were not observed, and the porous electrode substrate exhibited favorable handling property, gas permeability, and resistance in the penetration direction.

(Example 3)

A porous electrode substrate was obtained in the same manner as in Example 1 except the following points.

- A precursor sheet having a basis weight of 42 g/m$^2$ was obtained at the time of papermaking.
- An aqueous solution of a resol-type phenolic resin (product name: Sumilite Resin PR-55464 manufactured by Sumitomo Bakelite Co., Ltd.) was used as a thermosetting resin and a graphite powder (trade name: PYROLYTIC GRAPHITE PC-H manufactured by Ito Graphite Co., Ltd.,) was used as a carbon powder.
- A resin and graphite added liquid was prepared such that the ratio of resin solid was 80% and the ratio of graphite solid was 20% in the entire solids in the aqueous solution.
- A molded precursor sheet 2 in which the resin and graphite solids were attached at 72% by mass with respect to the basis weight of the molded precursor sheet 1 was obtained.

In the porous electrode substrate thus obtained, the breakage of carbon short fibers and in-plane shrinkage at the time of the carbonization treatment were not observed, and the porous electrode substrate exhibited favorable handling property, gas permeability, and resistance in the penetration direction.

(Example 4)

A porous electrode substrate was obtained in the same manner as in Example 1 except the following points.

- A precursor sheet having a basis weight of 39 g/m$^2$ was obtained at the time of papermaking.
- An aqueous solution of a resol-type phenolic resin (product name: Sumilite Resin PR-55464 manufactured by Sumitomo Bakelite Co., Ltd.) was used as a thermosetting resin.
- A resin and graphite added liquid was prepared such that the ratio of resin solid was 80% and the ratio of graphite solid was 20% in the entire solids in the aqueous solution.
- A molded precursor sheet 2 in which the resin and graphite solids were attached at 52% by mass with respect to the basis weight of the molded precursor sheet 1 was obtained.

In the porous electrode substrate thus obtained, the breakage of carbon short fibers and in-plane shrinkage at the time of the carbonization treatment were not observed, and the porous electrode substrate exhibited favorable handling property, gas permeability, and resistance in the penetration direction.

(Example 5)

A porous electrode substrate was obtained in the same manner as in Example 4 except the following points.

- A precursor sheet having a basis weight of 44 g/m$^2$ was obtained at the time of papermaking.
- A molded precursor sheet 2 in which the resin and graphite solids were attached at 55% by mass with respect to the basis weight of the molded precursor sheet 1 was obtained.

In the porous electrode substrate thus obtained, the breakage of carbon short fibers and in-plane shrinkage at the time of the carbonization treatment were not observed, and the porous electrode substrate exhibited favorable handling property, gas permeability, and resistance in the penetration direction.

(Example 6)

A porous electrode substrate was obtained in the same manner as in Example 4 except the following points.

- A precursor sheet having a basis weight of 44 g/m$^2$ was obtained at the time of papermaking.
- A molded precursor sheet 2 in which the resin and graphite solids were attached at 43% by mass with respect to the basis weight of the molded precursor sheet I was obtained.

In the porous electrode substrate thus obtained, the breakage of carbon short fibers and in-plane shrinkage at the time of the carbonization treatment were not observed, and the porous electrode substrate exhibited favorable handling property, gas permeability, and resistance in the penetration direction.

(Example 7)

A porous electrode substrate was obtained in the same manner as in Example 4 except the following points.

- A precursor sheet having a basis weight of 43 g/m$^2$ was obtained at the time of papermaking.
- A molded precursor sheet 2 in which the resin and graphite solids were attached at 72% by mass with respect to the basis weight of the molded precursor sheet 1 was obtained.

In the porous electrode substrate thus obtained, the breakage of carbon short fibers and in-plane shrinkage at the time of the carbonization treatment were not observed, and the porous electrode substrate exhibited favorable handling property, gas permeability, and resistance in the penetration direction.

(Comparative Example 1)

A porous electrode substrate was obtained in the same manner as in Example 4 except the following points.

- A precursor sheet having a basis weight of 44 g/m$^2$ was obtained at the time of papermaking.
- A molded precursor sheet 2 in which the resin and graphite solids were attached at 66% by mass with respect to the basis weight of the molded precursor sheet 1 was obtained.

In the porous electrode substrate thus obtained, the breakage of carbon short fibers and in-plane shrinkage at the time of the carbonization treatment were not observed, but the porous electrode substrate had a bulk density of $2.0 \times 10^{-1}$ g/cm$^3$ or more.

(Comparative Example 2)

A porous electrode substrate was obtained in the same manner as in Example 4 except the following points.

- A precursor sheet having a basis weight of 43 g/m$^2$ was obtained at the time of papermaking.
- A molded precursor sheet 2 in which the resin and graphite solids were attached at 75% by mass with respect to the basis weight of the molded precursor sheet 1 was obtained.

In the porous electrode substrate thus obtained, the breakage of carbon short fibers and in-plane shrinkage at the time of the carbonization treatment were not observed, but the porous electrode substrate had a bulk density of $2.0 \times 10^{-1}$ g/cm$^3$ or more.

(Comparative Example 3)

A porous electrode substrate was obtained in the same manner as in Example 1 except the following points.

- A precursor sheet having a basis weight of 50 g/m$^2$ was obtained at the time of papermaking.
- The addition of a thermosetting resin, drying, and a curing treatment were not performed.

The porous electrode substrate thus obtained had a low bending strength, and it was difficult to handle the porous electrode substrate by breakage of the carbon fiber and the carbonized resin.

(Comparative Example 4)

A porous electrode substrate having a bulk density of $1.6 \times 10^{-1}$ g/cm$^3$ was fabricated by the manufacturing method described in WO 2010/102195 A. The porous electrode substrate thus obtained had a low bending strength, and it was difficult to handle the porous electrode substrate by breakage of the carbon fiber and the carbonized resin.

Next, the porous electrode substrates obtained in Example 7, Comparative Example 1, and Comparative Example 2 were cut into 5 cm$^2$, immersed in a solution prepared by diluting a commercially available aqueous solution of PTFE (manufactured by Du Pont-Mitsui Fluorochemicals Co., Ltd.) with water to from 15 to 20% by mass, dried, then sintered at 360°C, and then sandwiched between commercially available CCM (abbreviation for Catalyst Coated Membrane, manufactured by W. L. Gore & Associates Co., LTD.), thereby fabricating a membrane electrode assembly. Next, the membrane electrode assembly was further sandwiched between carbon separators and tightened at a tightening torque of 4 N·m, thereby fabricating a single cell stack. Among the single cell stacks thus obtained, one using the carbon electrode base material fabricated by the method of Example 7 is denoted as a cell stack A, one using the carbon electrode base material fabricated by the method of Comparative Example 1 is denoted as a cell stack B, and one using the carbon electrode base material fabricated by the method of Comparative Example 2 is denoted as a cell stack C.

The power generation characteristics of the cell stacks described above in the case of generating electricity at 60°C by using hydrogen in the anode and air in the cathode are shown in Fig. 1. In Fig. 1, the symbol (○) denotes the power generation characteristics of the cell stack A, the symbol (□) denotes the power generation characteristics of the cell stack B, and the symbol (△) denotes the power generation characteristics of the cell stack C. As is apparent from Fig. 1, it has been found that a higher output voltage can be obtained in the cell stack A than in the cell stack B and the cell stack C, particularly in a high electric current density region. It is considered that this is because the gas diffusibility is hindered by the retention of water generated by the electrochemical reaction and a decrease in output is observed in the high electric current density region in the carbon electrode base material of Comparative Example 1 and Comparative Example 2 but favorable power generation characteristics were exhibited in the carbon electrode base material of Example 7 according to the invention particularly in the high electric current density region since the retention of water generated by the electrochemical reaction hardly occurs due to a low bulk density and the gas diffusibility is also favorable.

[Table 1]

| | | | Example | | | | | | |
|---|---|---|---|---|---|---|---|---|---|
| | | | 1 | 2 | 3 | 4 | 5 | 6 | 7 |
| Precursor sheet | Carbon fiber (A) | Parts by mass | 60 | 60 | 60 | 60 | 60 | 60 | 60 |
| | Thermoplastic resin-containing fiber (B) | Parts by mass | 20 | 20 | 20 | 20 | 20 | 20 | 20 |
| | Carbon fiber precursor fiber (C) | Parts by mass | 20 | 20 | 20 | 20 | 20 | 20 | 20 |
| | Basis weight of precursor sheet | g/m$^2$ | 48 | 50 | 42 | 39 | 44 | 44 | 43 |
| Molded precursor sheet 1 | Basis weight of molded precursor sheet 1 | g/m$^2$ | 48 | 50 | 42 | 39 | 44 | 44 | 43 |
| | Thickness of molded precursor sheet 1 | $\mu$m | 147 | 162 | 176 | 162 | 183 | 162 | 178 |
| | Bulk density of molded precursor sheet 1 | g/cm$^3$ | 0.326 | 0.310 | 0.239 | 0.238 | 0.240 | 0.271 | 0.240 |

(continued)

| | | | Example | | | | | | |
|---|---|---|---|---|---|---|---|---|---|
| | | | 1 | 2 | 3 | 4 | 5 | 6 | 7 |
| Molded precursor sheet 2 | Basis weight of molded precursor sheet 2 | g/m$^2$ | 70 | 76 | 72 | 59 | 68 | 63 | 73 |
| | Basis weight of CF in molded precursor sheet 2 | g/m$^2$ | 29 | 30 | 25 | 23 | 26 | 26 | 26 |
| | Basis weight of resin in molded precursor sheet 2 | g/m$^2$ | 16 | 18 | 24 | 16 | 19 | 15 | 25 |
| | Basis weight of graphite in molded precursor sheet 2 | g/m$^2$ | 7 | 8 | 6 | 4 | 5 | 4 | 6 |
| | Ratio of resin in added solids | % | 70% | 70% | 80% | 80% | 80% | 80% | 80% |
| | Ratio of graphite in added solids | % | 30% | 30% | 20% | 20% | 20% | 20% | 20% |
| | Basis weight of resin + graphite in molded precursor sheet 2/basis weight of CF in molded precursor sheet 2 | % | 79% | 86% | 120% | 87% | 92% | 72% | 120% |
| | Basis weight of resin + graphite in molded precursor sheet 2/basis weight of molded precursor sheet 1 | % | 47% | 51% | 72% | 52% | 55% | 43% | 72% |

(continued)

|  |  |  | Example | | | | | | |
|---|---|---|---|---|---|---|---|---|---|
|  |  |  | 1 | 2 | 3 | 4 | 5 | 6 | 7 |
| Porous electrode substrate | Thickness of porous electrode substrate ($1.5\times10^{-1}$ MPa) | $\mu$m | 293 | 275 | 237 | 210 | 235 | 208 | 230 |
|  | Basis weight of porous electrode substrate 1 | g/m$^2$ | 46 | 48 | 43 | 35 | 40 | 36 | 43 |
|  | Bulk density of porous electrode substrate ($1.5\times10^{-1}$ MPa) | g/cm$^3$ | 0.16 | 0.17 | 0.18 | 0.17 | 0.17 | 0.17 | 0.19 |
|  | Air permeability in thickness direction of porous electrode substrate | ml/cm$^2$/hr/Pa | 1853 | 1443 | 1152 | 1528 | 992 | 1158 | 957 |
|  | Bending strength of porous electrode substrate | MPa | 13 | 14 | 24 | 24 | 28 | 28 | 32 |
|  | Thickness (a) of porous electrode substrate ($5\times10^{-2}$ MPa) | $\mu$m | 319 | 277 | 245 | 212 | 227 | 196 | 231 |
|  | Thickness (b) of porous electrode substrate (3 MPa) | $\mu$m | 83 | 81 | 76 | 62 | 70 | 61 | 82 |
|  | Thickness (c) of porous electrode substrate ($5\times10^{-2}$ MPa) * After application of pressure of 3 MPa | $\mu$m | 158 | 152 | 142 | 121 | 133 | 121 | 145 |
|  | Electric resistance value of porous electrode substrate | m$\Omega\cdot$cm$^2$ | 4.11 | 3.48 | 1.49 | 2.84 | 2.12 | 2.45 | 2.47 |
|  | b/a | % | 26% | 29% | 31% | 29% | 31% | 31% | 36% |
|  | c/a | % | 49% | 55% | 58% | 57% | 58% | 62% | 63% |

[Table 2]

| | | | | Comparative Example | | | |
|---|---|---|---|---|---|---|---|
| | | | | 1 | 2 | 3 | 4 |
| Precursor sheet | | Carbon fiber (A) | Parts by mass | 60 | 60 | 60 | 60 |
| | | Thermoplastic resin-containing fiber (B) | Parts by mass | 20 | 20 | 20 | 20 |
| | | Carbon fiber precursor fiber (C) | Parts by mass | 20 | 20 | 20 | 20 |
| | | Basis weight of precursor sheet | g/m$^2$ | 44 | 43 | 50 | 48 |
| Molded precursor sheet 1 | | Basis weight of molded precursor sheet 1 | g/m$^2$ | 44 | 43 | 50 | 48 |
| | | Thickness of molded precursor sheet I | μm | 163 | 147 | 162 | - |
| | | Bulk density of molded precursor sheet 1 | g/cm$^3$ | 0.271 | 0.294 | 0.309 | - |
| Molded precursor sheet 2 | | Basis weight of molded precursor sheet 2 | g/m$^2$ | 74 | 26 | - | - |
| | | Basis weight of CF in molded precursor sheet 2 | g/m$^2$ | 27 | 26 | - | - |
| | | Basis weight of resin in molded precursor sheet 2 | g/m$^2$ | 23 | 26 | - | - |
| | | Basis weight of graphite in molded precursor sheet 2 | g/m$^2$ | 6 | 6 | - | - |
| | | Ratio of resin in added solids | % | 80% | 80% | - | - |
| | | Ratio of graphite in added solids | % | 20% | 20 % | - | - |
| | | Basis weight of resin + graphite in molded precursor sheet 2/basis weight of CF in molded precursor sheet 2 | % | 110% | 125% | - | - |
| | | Basis weight of resin + graphite in molded precursor sheet 2/basis weight of molded precursor sheet 1 | % | 66% | 75% | - | - |
| electrode substrate | | Thickness of porous electrode substrate (1.5×10$^{-1}$ MPa) | μm | 205 | 175 | 151 | 320 |
| | | Basis weight of porous electrode substrate | g/m$^2$ | 43 | 45 | 35 | 47 |
| | | Bulk density of porous electrode substrate (1.5×10$^{-1}$ MPa) | g/cm$^3$ | 0.21 | 0.26 | 0.23 | 0.16 |
| | | Air permeability in thickness direction of porous electrode substrate | ml/cm$^2$/hr/Pa | 690 | 457 | 1212 | 2088 |
| | | Bending strength of porous electrode substrate | MPa | 37 | 31 | 7 | 7 |
| | | Thickness (a) of porous electrode substrate (5×10$^{-2}$ MPa) | μm | 202 | 160 | 172 | 365 |
| | | Thickness (b) of porous electrode substrate (3 MPa) | μm | 84 | 88 | 52 | 94 |
| | | Thickness (c) of porous electrode substrate (5×10$^{-2}$ MPa) * After application of pressure of 3 MPa | μm | 141 | 129 | 112 | 196 |
| | | Electric resistance value of porous electrode substrate | mΩ·cm$^2$ | 2.39 | 2.12 | 3.13 | 5.11 |
| | | b/a | % | 41% | 55% | 30% | 26% |
| | | c/a | % | 70% | 81% | 65% | 54% |

INDUSTRIAL APPLICABILITY

The porous electrode substrate according to the invention is manufactured in the order of the "formation of a sheet-like material", the "heating and pressurizing treatment", thereafter the "addition of a thermosetting resin", and then the "carbonization by high-temperature calcination" by mixing the thermoplastic resin-containing fiber at the time of forming the sheet-like material. The thermosetting resin is uniformly attached in the in-plane direction and in the direction perpendicular to the plane as the heating and pressurizing treatment is not performed after the addition of the thermosetting resin, and it is thus possible to provide a porous electrode substrate which has a low bulk density and favorable handling property and gas permeability and has been thus hardly fabricated in the prior art. In addition, it is possible to provide a membrane electrode assembly and a polymer electrolyte fuel cell which include the porous electrode substrate.

**Claims**

1.  A porous electrode substrate comprising a structure having a carbon fiber (A) bonded by a carbide, wherein the porous electrode substrate has a bulk density of $1.0\times10^{-1}$ g/cm$^3$ or more and $2.0\times10^{-1}$ g/cm$^3$ or less and a bending strength of 10 MPa or more when a pressure of $1.5\times10^{-1}$ MPa is applied to the porous electrode substrate.

2.  The porous electrode substrate according to claim 1, wherein the porous electrode substrate has a thickness of 50 $\mu$m or more and 500 $\mu$m or less when a pressure of $1.5\times10^{-1}$ MPa is applied to the porous electrode substrate.

3.  The porous electrode substrate according to claim 1 or 2, wherein the porous electrode substrate has an air permeability of 500 ml/cm$^2$/hr/Pa or more in a thickness direction.

4.  The porous electrode substrate according to any one of claims 1 to 3, wherein a thickness of the porous electrode substrate when a pressure of 3 MPa is applied to the porous electrode substrate is 10% or more and 70% or less of a thickness of the porous electrode substrate when a pressure of $5.0\times10^{-2}$MPa is applied to the porous electrode substrate.

5.  The porous electrode substrate according to any one of claims 1 to 4, wherein a thickness of the porous electrode substrate when the pressure is decreased to $5.0\times10^{-2}$ MPa after a pressure of 3 MPa is applied to the porous electrode substrate is 40% or more and 95% or less of a thickness of the porous electrode substrate when a pressure of $5.0\times10^{-2}$MPa is applied before the pressure of 3 MPa is applied to the porous electrode substrate.

6.  The porous electrode substrate according to any one of claims 1 to 5, wherein the porous electrode substrate has an electric resistance value of 1.0 m$\Omega\cdot$cm$^2$ or more and 10.0 m$\Omega\cdot$cm$^2$ or less in a thickness direction when a pressure of 3 MPa is applied to the porous electrode substrate.

7.  A membrane electrode assembly comprising the porous electrode substrate according to any one of claims 1 to 6.

8.  A polymer electrolyte fuel cell comprising the membrane electrode assembly according to claim 7.

9.  A manufacturing method for a porous electrode substrate comprising the following steps (1) to (5) in this order:

    step (1): a step of manufacturing a precursor sheet having a carbon fiber (A) and a thermoplastic resin-containing fiber (B) dispersed;
    step (2): a step of obtaining a molded precursor sheet 1 by heating and pressurizing the precursor sheet to melt the thermoplastic resin-containing fiber (B) and to fuse the thermoplastic resin-containing fiber (B) with the carbon fiber (A) and molding the fused material;
    step (3): a step of adding a thermosetting resin to the molded precursor sheet 1 obtained;
    step (4): a step of obtaining a molded precursor sheet 2 by heating the molded precursor sheet 1 to which a thermosetting resin is added to cure the thermosetting resin contained; and
    step (5): a step of obtaining a porous electrode substrate by carbonizing the molded precursor sheet 2 obtained at a temperature of 1000°C or higher.

10. The manufacturing method according to claim 9, wherein a molded precursor sheet 2 is obtained by heating the molded precursor sheet 1 to which a resin is added to cure the thermosetting resin contained as well as to melt the thermoplastic resin-containing fiber (B) and to increase a thickness of the molded precursor sheet 1 in the step (4).

**11.** The manufacturing method according to claim 9 or 10, wherein a precursor sheet further having a carbon fiber precursor fiber (C) dispersed together with a carbon fiber (A) and a thermoplastic resin-containing fiber (B) is manufactured in the step (1).

**12.** The manufacturing method according to any one of claims 9 to 11, wherein a carbon powder (D) is added in the step (1).

**13.** The manufacturing method according to any one of claims 9 to 12, wherein a carbon powder (D) is added together with a thermosetting resin in the step (3).

**14.** The manufacturing method according to any one of claims 9 to 13, wherein the thermosetting resin is a water-soluble phenolic resin and/or a water-dispersible phenolic resin.

FIG. 1

## INTERNATIONAL SEARCH REPORT

| International application No. |
|---|
| PCT/JP2016/060930 |

A.  CLASSIFICATION OF SUBJECT MATTER
*H01M4/96*(2006.01)i, *D04H13/00*(2006.01)i, *H01M4/86*(2006.01)i, *H01M4/88* (2006.01)i, *H01M8/10*(2016.01)i

According to International Patent Classification (IPC) or to both national classification and IPC

B.  FIELDS SEARCHED

Minimum documentation searched (classification system followed by classification symbols)
H01M4/96, D04H13/00, H01M4/86, H01M4/88, H01M8/10

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | JP 11-185771 A  (Osaka Gas Co., Ltd.),<br>09 July 1999 (09.07.1999),<br>paragraphs [0037] to [0038]<br>(Family: none) | 9,10,14<br>11-14<br>1-8 |
| Y | WO 2013/147174 A1  (Mitsubishi Rayon Co., Ltd.),<br>03 October 2013 (03.10.2013),<br>paragraphs [0005] to [0006], [0065]<br>& JP 2014-207240 A      & US 2015/0086901 A1<br>paragraphs [0006] to [0008], [0118]<br>& EP 2833450 A1        & CN 104205448 A<br>& KR 10-2014-0141607 A | 11-14 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 June 2016 (21.06.16) | 05 July 2016 (05.07.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2016/060930

C (Continuation). DOCUMENTS CONSIDERED TO BE RELEVANT

| Category* | Citation of document, with indication, where appropriate, of the relevant passages | Relevant to claim No. |
|---|---|---|
| A | WO 2001/056103 A1 (Mitsubishi Rayon Co., Ltd.), 02 August 2001 (02.08.2001), & JP 2004-259711 A & US 2002/0175073 A1 & EP 1195828 A1 & KR 10-2003-0090793 A & CA 2347432 A1 | 1-14 |
| A | JP 2004-511672 A (Carl Freudenberg KG.), 15 April 2004 (15.04.2004), & US 2003/0109189 A1 & WO 2002/031841 A2 & DE 10050512 A1 & CA 2396286 A1 | 1-14 |
| A | JP 2008-204823 A (Toho Tenax Co., Ltd.), 04 September 2008 (04.09.2008), (Family: none) | 1-14 |
| A | JP 2006-4858 A (Mitsubishi Rayon Co., Ltd.), 05 January 2006 (05.01.2006), (Family: none) | 1-14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015075672 A
- JP 2016026631 A
- WO 2010102195 A
- WO 2014126002 A
- WO 2012060258 A

- JP 2007244997 A
- JP 2009084382 A
- JP 2004307815 A
- JP 2006056960 A